Europäisches Patentamt

(19) European Patent Office

Office européen des brevets

(11) Numéro de publication : **0 311 917 B1**

(12) **FASCICULE DE BREVET EUROPEEN**

(45) Date de publication du fascicule du brevet :
05.06.91 Bulletin 91/23

(51) Int. Cl.$^5$ : **G01N 35/06**

(21) Numéro de dépôt : **88116613.6**

(22) Date de dépôt : **07.10.88**

(54) **Procédé et dispositif de filtration et de dosage d'échantillons liquides.**

(30) Priorité : **15.10.87 CH 4036/87
19.10.87 FR 8714508**

(43) Date de publication de la demande :
**19.04.89 Bulletin 89/16**

(45) Mention de la délivrance du brevet :
**05.06.91 Bulletin 91/23**

(84) Etats contractants désignés :
**AT BE DE ES GB GR IT LU NL SE**

(56) Documents cités :
**DE-A- 2 217 669
US-A- 3 371 786
US-A- 3 811 484
US-A- 4 457 184**

(73) Titulaire : **Nivarox-FAR S.A.
Avenue du Collège 10
CH-2400 Le Locle (CH)**

(72) Inventeur : **Meyrat, Pierre-André
Rue D.P. Bourquin 5
CH-2300 La Chaux-de-Fonds (CH)
Inventeur : Oppliger, Alain
Avenue Léopold-Robert 136
CH-2300 La Chaux-de-Fonds (CH)
Inventeur : Steiner, Denis
Rue de la Clé 47
CH-2610 St-Imier (CH)**

(74) Mandataire : **de Raemy, Jacques et al
ICB Ingénieurs Conseils en Brevets SA
Passage Max. Meuron 6
CH-2001 Neuchâtel (CH)**

EP 0 311 917 B1

Jouve, 18, rue Saint-Denis, 75001 PARIS

## Description

La présente invention est relative à un procédé et à un dispositif de filtration et de dosage d'un échantillon liquide.

Pour l'analyse d'échantillons liquides on a souvent besoin d'un appareil qui permette d'abord la filtration des échantillons, puis le dosage de ces échantillons. Un tel appareil trouve son emploi par exemple dans la mesure de la teneur en ATP (adénosine-triphosphate) d'une substance afin d'en estimer l'activité biologique.

Dans un article de la revue "Soil Biol. Biochem." volume 16, No 4, pages 361-366, 1984, N. Maire décrit une méthode d'analyse d'un milieu, tel que le sol, qui consiste à extraire la molécule ATP des cellules du milieu par rupture des parois cellulaires, puis la mesure photométrique de la molécule par une réaction enzymatique de bioluminescence, l'intensité de la lumière émise au cours de cette réaction étant directement proportionnelle à la concentration de l'ATP, concentration qui est elle-même représentative de l'activité biologique de l'échantillon de sol examiné. En effet, l'ATP est un mononucléotide du métabolisme que l'on retrouve dans tous les organismes vivants et qui assure la transmission ou la mise en réserve d'énergie dans la plupart des réactions biochimiques se déroulant au sein des cellules vivantes (respiration, fermentation, photosynthèse, etc).

L'extraction de la molécule ATP par rupture des parois cellulaires est réalisée en diluant l'échantillon de sol dans une certaine quantité d'acide telle que le $H_2SO_4$ complétée de préférence par une opération mécanique de mixage de l'échantillon ainsi dilué. Comme par ailleurs, la réaction enzymatique nécessaire à l'analyse photométrique ne supporte pas de milieu acide, il est nécessaire, avant de procéder à cette analyse photométrique, d'ajuster le pH à une valeur pratiquement neutre par adjonction d'un adjuvant spécialement destiné à cet effet. L'ajustage du pH doit naturellement intervenir sur un volume d'échantillon bien déterminé et c'est à ce niveau que dans l'installation décrite ci-après interviennent les caractéristiques essentielles de la présente invention.

Il est bien entendu que la description qui va suivre de cette installation d'analyse, ne doit pas être considérée, comme une limitation aux applications de l'invention, qui, au contraire, peut être utilisée chaque fois que l'on souhaite obtenir le filtrage et le dosage d'un certain nombre d'échantillons individuels sans qu'il y ait risque de contamination des échantillons entre eux.

En effet, lorsqu'on désire traiter successivement un grand nombre d'échantillons liquides, avec un dosage volumique précis, on se trouve confronté à un problème de rinçage des organes chargés d'opérer le dosage, et des canalisations qui établissent la communication entre ces divers organes.

En général, le nettoyage du circuit d'écoulement des échantillons est effectué avec un liquide de rinçage qui les lave entre les dosages des échantillons successifs afin de chasser tout résidu de l'échantillon traité précédemment.

A défaut de prendre cette précaution, de tels résidus peuvent modifier les caractéristiques de l'échantillon suivant, telle que par exemple sa composition ou sa concentration, ce dont il pourrait résulter des erreurs au niveau de l'analyse.

Outre le fait que l'opération de rinçage risque de modifier la concentration des échantillons, car il reste toujours dans le circuit d'écoulement une certaine quantité de liquide de rinçage, il faut observer également que cette opération nécessite des organes particuliers et que par ailleurs elle rallonge le temps de traitement de chaque échantillon puisque pendant l'opération de nettoyage, le dosage ne peut avoir lieu.

On a décrit dans le document FR-86 18256 déposé de le 24 décembre 1986 un procédé et un dispositif au moyen desquels le dosage des échantillons successifs peut être effectué sans perturber, ni la composition, ni la concentration des échantillons, et sans également augmenter le temps de traitement de chaque échantillon au-delà de l'intervalle de temps strictement nécessaire pour le dosage.

Pour ce faire, le procédé décrit consiste à préparer dans plusieurs premiers récipients des échantillons dont le volume est constitué de la quantité d'échantillon à obtenir majorée d'une quantité d'échantillon en excès, et à transvaser successivement le contenu de chacun des premiers récipients, d'abord vers une évacuation jusqu'à concurrence de ladite quantité en excès, puis vers un second récipient jusqu'à concurrence de la quantité d'échantillon liquide à obtenir. Ainsi la quantité en excès de l'échantillon suivant est utilisée elle-même pour le rinçage du circuit d'écoulement de l'échantillon, en chassant de ce circuit tout résidu de l'échantillon précédent après quoi les seconds récipients ne peuvent que recevoir une quantité correcte d'échantillon exclusivement constituée du liquide formé par l'échantillon suivant.

Les caractéristiques indiquées ci-dessus se retrouvent dans la présente invention qui propose cependant une amélioration du procédé en ce sens que la filtration de l'échantillon est totalement indépendante de son dosage ce qui autorise un dosage plus précis. D'autre part la présente invention conduit à proposer un dispositif moins compliqué à réaliser et plus universel d'emploi.

Pour ce faire, le procédé selon la présente invention est caractérisé par le fait qu'on fournit un premier récipient dans lequel on dispose l'échantillon à filtrer et à doser, le volume de l'échantillon étant constitué de la quantité d'échantillon à obtenir majorée d'une quantité d'échantillon en excès, qu'on fournit un deuxième récipient dans lequel on transvase à travers des moyens de filtration interposés entre le premier et deuxième récipients l'échantillon contenu dans le premier récipient, le volume de l'échantillon transvasé étant également constitué de la quantité d'échantillon à obtenir majorée d'une quantité d'échantillon en excès, qu'on transvase dans le premier récipient une quantité d'échantillon qui soit inférieure à la quantité en excès contenu dans le deuxième récipient et qu'on fournit un troisième récipient dans lequel on transvase, à partir du deuxième récipient, la quantité d'échantillon liquide à obtenir.

L'invention a également pour objet un dispositif pour la mise en oeuvre du procédé défini ci-dessus, ce dispositif étant caractérisé par le fait qu'il comporte un premier poste de filtration comprenant un premier récipient contenant l'échantillon liquide à filtrer et à doser majoré d'une quantité en excès par rapport au volume d'échantillon à obtenir, un deuxième récipient comportant en outre des moyens de transvasement dudit échantillon dans ledit second récipient et des moyens de filtration interposés sur le chemin par lequel s'opère le transvasement, et un second poste de dosage disposé à la suite dudit premier poste de filtration, ce second poste de dosage comprenant des moyens de pompage pour déverser d'abord dans le premier récipient une certaine quantité de liquide contenu dans le deuxième récipient, puis dans un troisième récipient une quantité prédéterminée de liquide contenu dans ledit deuxième récipient et correspondant à la quantité de liquide à obtenir, ceci en réponse à des moyens de dosage disposés sur ledit second poste.

L'invention sera mieux comprise à l'aide de la description qui va suivre, donnée uniquement à titre d'exemple et faite en se référant aux dessins annexés dans lesquels :

– la figure 1 est un desssin schématique expliquant le principe général du procédé et du dispositif proposé par l'invention, les figures 1a à 1e présentant successivement les diverses étapes conduisant à la filtration de l'échantillon et les figures 1f à 1i présentant successivement les diverses étapes conduisant au dosage dudit échantillon ;

– la figure 2 est une vue en élévation frontale, partiellement coupée, du dispositif de filtration selon l'invention, vue correspondant aux figures 1a à 1e ;

– la figure 3 est une vue en élévation latérale, prise selon la flèche III de la figure 2, les éléments composant le dispositif étant représentés dans des positions relatives différentes ;

– la figure 4 est une vue en élévation frontale, partiellement coupée, du dispositif de dosage selon l'invention, vue correspondant aux figures 1f à 1i; et

– la figure 5 est une vue de dessus de la figure 4.

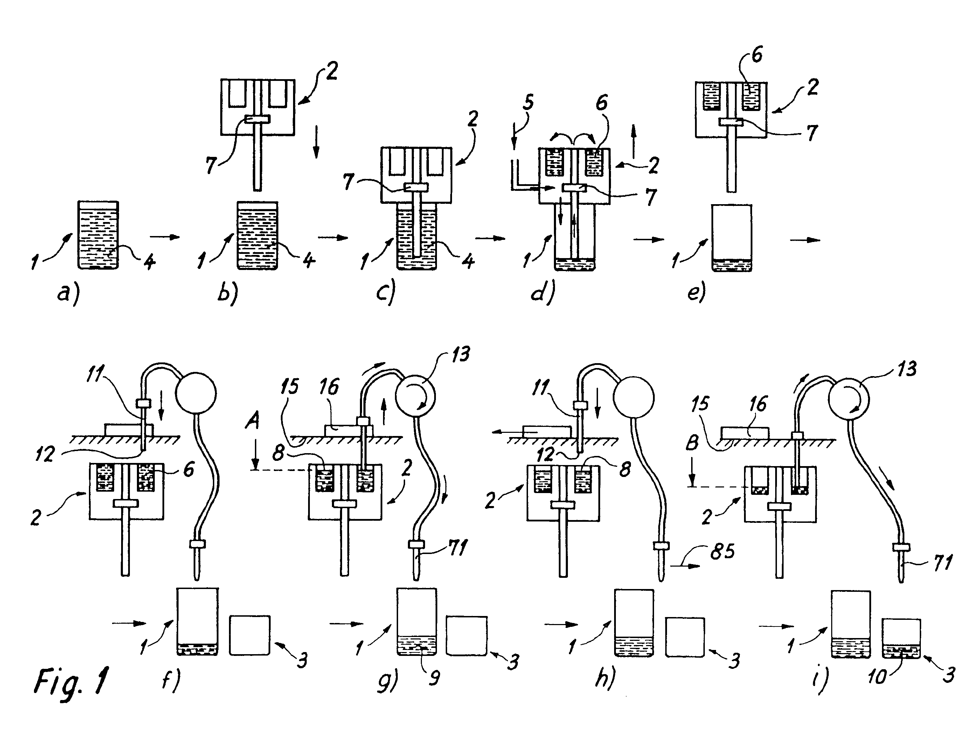

La figure 1 est un dessin schématique expliquant le principe général du procédé et du dispositif proposé par l'invention. En figure 1a est montré qu'on fournit un premier récipient 1 contenant l'échantillon 4 à filtrer et à doser. On s'arrange pour que le volume de cet échantillon contienne la quantité d'échantillon à obtenir (par le dosage qui va suivre) majorée d'une quantité d'échantillon en excès. En figure 1b est fourni un deuxième récipient 2 dans lequel est transvasé l'échantillon contenu dans le premier récipient. Une méthode de transvasement est montrée en figure 1d. Pour réaliser ce transvasement selon la méthode prise en exemple, on applique le deuxième récipient 2 sur le premier récipient 1 comme montré en figure 1c, puis on insuffle de l'air comprimé 5 dans le premier récipient ce qui va chasser tout ou partie du liquide dans le deuxième récipient. On fait en sorte que le volume d'échantillon 6 transvasé dans le deuxième récipient soit également constitué de la quantité d'échantillon à obtenir majorée d'une quantité d'échantillon en excès.

On pourrait envisager d'autres méthodes de transvasement que celle qui a été prise en exemple ci-dessus. Par exemple le deuxième récipient pourrait porter un piston creux susceptible d'être introduit dans le premier récipient formant cylindre. En s'enfonçant dans le récipient, le cylindre chasse alors le liquide dans le second récipient.

Sur le chemin emprunté par le liquide lors du transvasement, on prévoit, selon l'invention, des moyens de filtration symbolisés, dans les figures 1b à 1e, par une chambre 7 qui peut contenir un papier filtre par exemple.

Une fois que le liquide filtré est stocké dans le deuxième récipient 2, on procède au transvasement dans le premier récipient 1, d'une quantité d'échantillon 8 qui soit inférieure à la quantité en excès contenu dans le deuxième récipient, comme cela est apparent à la figure 1g. On est sûr, de cette façon, qu'il restera assez de liquide pour le dosage qui va suivre. Cette quantité d'échantillon 8 est choisie suffisante cependant pour rincer les canalisations de tous résidus qui pourraient subsister lors de traitement d'un échantillon précédent selon le principe qui a été évoqué plus haut ; on remarquera que le premier récipient 1 qui avait contenu l'échantillon non filtré sert maintenant en quelque sorte de poubelle pour cette quantité de liquide 8 quine sera pas utilisé. Le contenu 9 du premier récipient peut alors être jeté.

Après le rinçage, on procède enfin au transvasement, dans un troisième récipient 3, de la quantité d'échantillon liquide 10 à obtenir comme le montre la figure 1i. On obtient donc dans le troisième récipient 3 le dosage 10 de liquide voulu.

Le principe du dosage, c'est-à-dire du transvasement dans le troisième récipient d'une quantité de liquide à obtenir a été ainsi expliqué selon son acception la plus générale. Plusieurs méthodes peuvent être envisagés pour réaliser pratiquement ce dosage. On pourrait, par exemple, employer le système cylindrique-piston évoqué plus haut, la course du piston définissant la quantité de liquide à doser. On va décrire ici une méthode préférentielle qui est une caractéristique particulière de l'invention et qui est intéressante par sa simplicité ainsi que par la précision du résultat obtenu.

Pour ce faire, on amène d'abord le deuxième récipient 2 au droit d'une pipette 11 comme on le voit sur la figure 1f. On plonge ensuite la pipette 11 dans le liquide 6 et on suce le liquide jusqu'à ce qu'il ait atteint un premier niveau A correspondant à l'embouchure 12 de la pipette. On déverse le liquide sucé 8 dans le premier récipient 1 (voir figure 1g). On s'arrange naturellement pour que la quantité du liquide déversé soit inférieure à la quantité en excès contenue dans le deuxième récipient 2. Cette quantité est mesurée bien sûr par la profondeur à laquelle la pipette a été plongée, puisqu'une fois que le liquide a atteint le niveau A auquel se trouve située l'embouchure de la pipette, aucune aspiration de liquide n'est plus possible. Comme le montre la figure 1i, on abaisse ensuite l'embouchure 12 de la pipette 11 à un second niveau B, inférieur au premier, choisi de telle façon que le liquide contenu entre les premier A et second B niveaux corresponde à la quantité d'échantillon liquide à obtenir ou à doser. On suce enfin le liquide contenu entre les deux niveaux A et B qu'on déverse finalement dans le troisième récipient 3. La quantité de liquide à obtenir 10 se trouve donc stockée dans ce récipient. Là également, on comprend que la succion du liquide est interrompue dès que le liquide a atteint le niveau B où se trouve l'embouchure de la pipette. Le liquide est aspiré au moyen d'une pompe 13 comme le montrent les figures 1f à 1i. L'entrée de la pompe est reliée à la pipette 11 et sa sortie à une autre pipette 71 qui peut se déplacer du droit du premier récipient 1 au droit du troisième récipient 3 en suivant le chemin indiqué par la flèche 85.

Le déplacement de l'embouchure de la pipette 11 du niveau A, qui consiste en fait en une mise à zéro du système, au niveau B peut être réalisé de diverses façons, par exemple en enclenchant un moteur pendant un temps déterminé ou encore un moteur pas à pas qui serait programmé. On a préféré ici un système utilisant un plan de référence 15 et une cale 16 comme on le voit aux figures 1f à 1i. Un tel système sera décrit en détail plus loin.

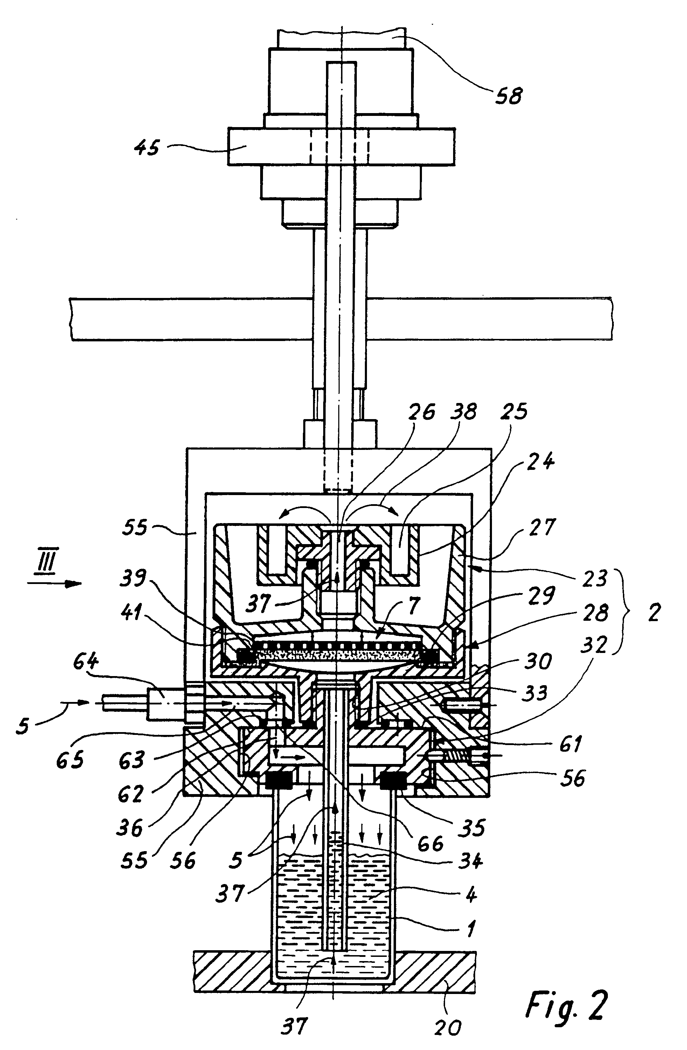

On va décrire maintenant, à l'aide des figures 2 à 5, un dispositif permettant de mettre en oeuvre le procédé selon l'invention, procédé qui a été exposé ci-dessus.

Très généralement, le dispositif selon l'invention est prévu pour traiter plusieurs échantillons liquides les uns à la suite des autres. Les échantillons, contenus dans des premiers récipients 1, sont placés sur un carrousel ou un ruban transporteur dont l'avance est réglée en fonction des opérations à effectuer. Généralement, à chaque premier récipient 1 est associé un troisième récipient 3 qui va contenir, à la fin des opérations, la quantité de liquide dosé à obtenir. Généralement aussi, à chaque couple présenté par les premier et troisième récipients, est associé un deuxième récipient 2 où est effectuée la filtration. Ces trois récipients sont transportés successivement d'un poste de travail à l'autre.

Dans le cas du traitement des molécules ATP évoqué plus haut, on trouvera au premier poste, l'addition d'une quantité déterminée de $H_2SO_4$ à l'échantillon préalablement versé dans les premiers récipients, au deuxième poste, le mixage de la solution obtenue au premier poste, au troisième poste, le transvasement avec filtration du liquide du premier au second récipient, au quatrième poste, le dosage du liquide et le stockage de la quantité dosée dans le troisième récipient, au cinquième poste, l'ajustage du pH de la quantité dosée et au sixième poste, l'analyse photométrique de l'échantillon résultant de l'opération effectuée au cinquième poste. Ces divers postes sont commandés par l'intermédiaire d'interfaces qui transforment les ordres d'un ordinateur en des signaux de commande utilisables par les divers organes équipant les postes de travail. L'ordinateur est généralement équipé d'un écran de visualisation et d'un clavier de commande, l'installation fonctionnant automatiquement à l'aide d'un programme qui est exécuté par l'ordinateur. Le ruban transporteur effectue un mouvement de translation intermittant également commandé par l'ordinateur.

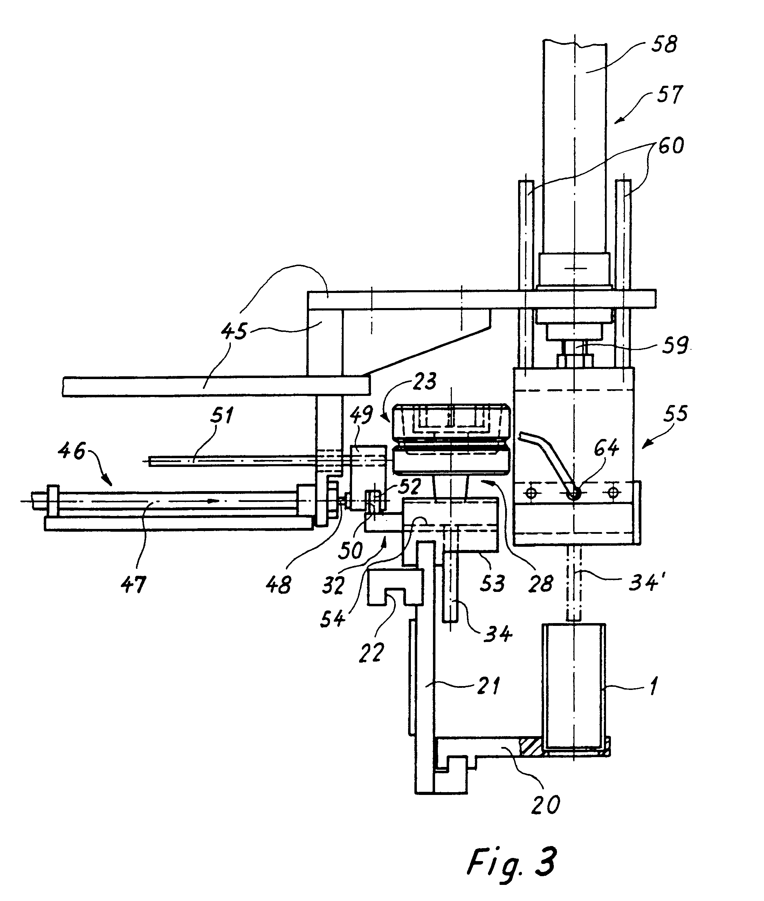

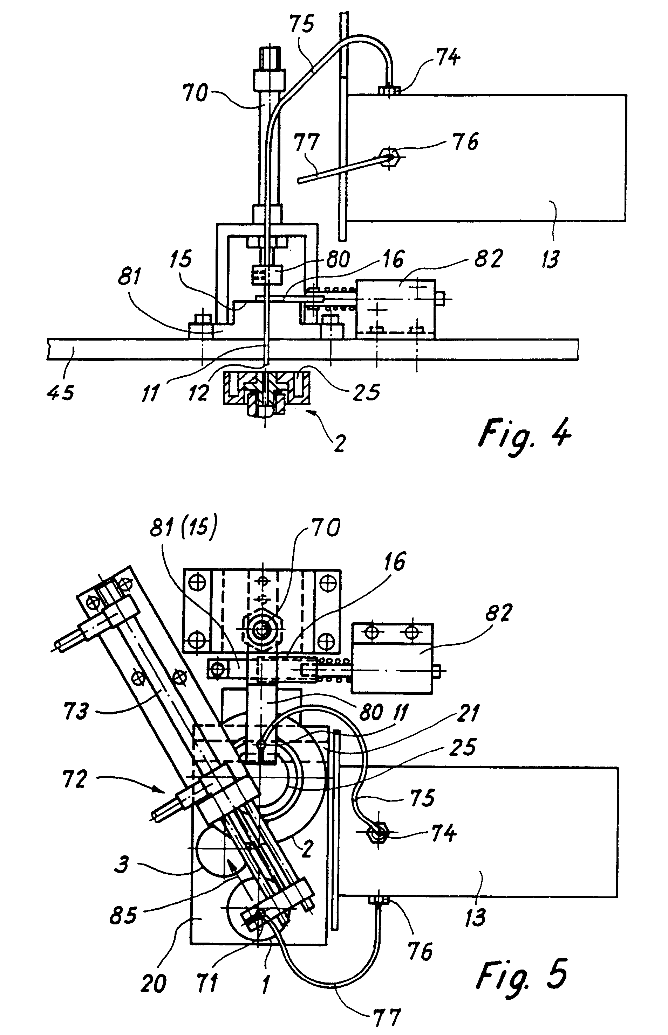

La figure 2 est une vue en élévation frontale, partiellement coupée, du poste de filtration selon l'invention et la figure 3, une vue en élévation latérale prise selon la flèche III de la figure 2, les éléments composants ce poste étant représentés dans des positions relatives différentes. A ce poste sont effectuées les opérations qui ont été décrites à propos des figures 1a à 1e. Ces figures montrent que ce poste de filtration comporte un premier récipient 1 contenant l'échantillon liquide à filtrer 4, cet échantillon étant majoré d'une quantité en excès par rapport au volume d'échantillon que l'on cherher à obtenir. Ce premier récipient 1 est posé dans un alvéole d'un support 20 lui-même solidaire d'un véhicule 21 muni d'une coulisse 22 qui peut se déplacer le long d'un rail non représenté. Ce poste de travail comporte aussi un deuxième récipient 2 qui comprend d'une part des moyens de transvasement du liquide du premier au deuxième récipient et d'autre part des moyens de filtration interposés sur le chemin par lequel s'opère le transvasement. Le support 20 comprend encore un troisième récipient qui n'est pas représenté aux figures 2 et 3 pour ne pas la surcharger. La position du troisième récipient par rapport au deuxième apparaît par contre à la figure 5 qui sera discutée plus bas.

On va décrire maintenant en détail, en s'appuyant sur la figure 2, un mode de réalisation préféré du deuxième récipient 2. Ce récipient comporte d'abord un élément supérieur 23 qui comporte un bloc cylindrique 24 dans lequel est pratiqué une chambre annulaire 25 destinée à recevoir le liquide 4 transvasé du premier récipient 1. Au centre du bloc cylindrique 24 est percé un conduit axial 26. Le bloc cylindrique est entouré d'une cuvette 27, pour recevoir le liquide susceptible de déborder de la chambre 25. Le deuxième récipient 2 comporte encore un élément intermédiaire 28 ajusté à l'élément supérieur 23 au moyen d'un premier joint d'étanchéité 29. Cet élément intermédiaire 28 présente sur sa partie inférieure une ouverture 30 alignée sur le conduit axial 26 de l'élément supérieur 23. Une chambre de filtration 7 est interposée entre les éléments supérieur et intermédiaire. Enfin le deuxième récipient 2 comporte un élément inférieur 32 ajusté à l'élément intermédiaire 28 au moyen d'un deuxième joint d'étanchéité 33. Une canule 34 émerge de la partie inférieure de l'élément inférieur 32, canule qui est alignée sur l'ouverture 30 de l'élément intermédiaire. Comme on le voit sur la figure 2, l'élément inférieur 32, comporte encore un troisième joint d'étanchéité 35 qui est appliqué sur les bords du premier récipient 1 lors du transvasement. L'élément inférieur présente encore un canal 36 par lequel peut être injecté de l'air comprimé. Comme le montrent les flèches 5 de la figure, cet air comprimé agit sur le contenu 4 du récipient et chasse son liquide par le chemin indiqué par les flèches 37, chemin composé successivement de la canule 34, de l'ouverture 30, de la chambre de filtration 7 et enfin du conduit axial 26. Le liquide remplit alors la chambre annulaire 25 en suivant le chemin indiqué par les flèches 38.

L'ajustement des trois éléments décrits peut être fait de diverses manières, ici il s'agit d'éléments vissées les uns sur les autres. La chambre supérieure 23 a été décrite comme une unité en soi. En réalité la figure montre que le bloc cylindrique 24 est également vissé à la cuvette 27, un joint d'étanchéité étant disposé entre ces deux pièces.

En ce qui concerne plus particulièrement la chambre de filtration 7, la figure 2 montre que ladite chambre comporte une grille 39 faisant partie de l'élément supérieur 23 et qu'un filtre 41 (papier poreux, par exemple) est disposé contre ladite grille, en même temps qu'il est pincé sous le premier joint d'étanchéité 29.

Le premier poste de filtration va être expliqué maintenant en s'aidant de la figure 3. Ce poste comprend un châssis 45 qui supporte des premiers moyens moteurs 46 comprenant, dans le mode d'exécution retenu, un vérin pneumatique 47 dont la tige mobile 48 est fixée à un élément 49 pourvu d'une rainure 50. L'élément 49 est guidé dans une trajectoire rectiligne grâce à des guides 51 coopérant avec le châssis 45. L'élément inférieur 32 du deuxième récipient est muni d'un ergot 52 coopérant avec la rainure 50 grâce auxquels ledit deuxième récipient peut se déplacer horizontalement d'une première position de retrait – celle représenté à la figure 3 – à une deuxième position où sa canule 34' se trouve au droit de l'orifice présenté par le premier récipient 1. En position de retrait, l'élément inférieur 32 du deuxième récipient repose dans un élément 53 muni de rainures 54 entre lesquelles cet élément inférieur 32 peut coulisser. L'élément 53 est solidaire lui-même du véhicule 21. Quand le vérin 47 est alimenté, le deuxième récipient est poussé vers la droite de la figure, sort de l'élément 53 et s'engage dans des moyens de préhension référencés 55. Comme on peut le voir à la figure 2, la partie inférieure de ces moyens de préhension ou pince 55 est également munie de coulisses 56 dans lesquelles l'élément inférieur 32 du deuxième récipient 2 peut s'engager. Quand le deuxième récipient est engagé à fond dans la pince 55, il se trouve libéré de l'élément 53 faisant partie du véhicule 21 et va donc pouvoir se mouvoir verticalement comme on va l'expliquer maintenant.

La figure 3 montre que le châssis 45 porte des seconds moyens moteurs 57 comportant un vérin pneumatique 58 dont la tige mobile 59 est fixée à la pince 55. Des guides 60 préviennent toute rotation de la pince pendant son déplacement. Quand le vérin 58 est commandé, la pince 55 descend verticalement jusqu'à ce que le troisième joint d'étanchéité 35 de l'élément inférieur 32 du deuxième récipient 2 vienne toucher les bords du premier récipient 1 (situation présentée en figure 2). A partir de cet instant le transvasement peut avoir lieu.

Pendant le transvasement, on continue d'alimenter le vérin pour assurer d'abord une bonne application du joint 35 contre les bords du récipient 1. La force appliquée sur le récipient 1 a pour effet ensuite de coller la partie supérieure 61 de l'élément inférieur 32 contre le haut 62 de la coulisse 56 pratiquée dans la pince, ce qui comprime un quatrième joint d'étanchéité 63 dont l'utilité va apparaître maintenant.

La figure 2 montre que la pince 55 comprend un embout 64 connecté à une amenée d'air comprimé 5. Cet embout est muni d'un conduit 65 pratiqué à l'intérieur de la pince. L'extrémité du conduit 65 présente un orifice 66 qui correspond à l'entrée du canal 36 pratiqué dans l'élément inférieur 32 du deuxième récipient 2, cette correspondance étant réalisée par construction lorsque le récipient 2 se trouve introduit à fond dans la pince 55. Le quatrième joint 63 étant interposé entre l'orifice 66 du conduit 65 et l'entrée du canal 36 et étant comprimé par la force appliquée par le vérin, il en résulte un écoulement sans fuite de l'air comprimé utilisé pour chasser le liquide hors du premier récipient.

On utilisera de préférence, pour alimenter le vérin 58, la même pression d'air comprimé 5 que celle qui est utilisée pour chasser le liquide 4 du premier récipient 1. Dans ces conditions, si l'on choisit pour le vérin 58 un diamètre de piston qui soit plus grand que le diamètre intérieur du premier récipient, on comprendra que la force exercée par le deuxième récipient sur le premier, par l'intermédiaire du troisième joint 35, sera toujours plus grande que la force exercée sur le liquide 4 et qui tend à soulever la pince 55. On est ainsi toujours assuré d'une bonne application des deux récipients l'un sur l'autre, ainsi que d'une bonne étanchéité du chemin suivi par l'air comprimé.

Une fois la quantité de liquide filtrée transvasée dans le deuxième récipient, on fait subir à ce récipient un chemin inverse à celui décrit plus haut : on remonte la pince 55 en actionnant le vérin 58 et l'on ramène le deuxième récipient 2 à sa position de retrait au moyen du vérin 47. On retrouve alors la situation dessinée en figure 3. A ce moment on fait avancer le véhicule 21 au poste suivant, par exemple en avant du plan présenté par la figure 3. Le second récipient se dégage alors de l'emprise du vérin 47 puisque l'ergot 52 glisse en dehors de la rainure 50. Le véhicule 21, muni de ses trois mêmes récipients 1, 2 et 3, se présente alors devant le second poste de dosage qui va être expliqué maintenant.

La figure 4 est une vue en élévation frontale, partiellement coupée du poste de dosage selon l'invention et la figure 5, une vue de dessus de la figure 4. A ce poste sont effectuées les opérations qui ont été décrites à propos des figures 1f à 1i.

La figure 5 montre les deux récipients 1 et 3 disposés sur leur support commun 20 ainsi que le récipient 2 solidaire du véhicule 21. Dans la chambre annulaire 25 du récipient 2 est susceptible de plonger une première pipette 11 comme on le voit mieux en figure 4. Cette pipette peut se déplacer verticalement grâce à des moyens moteurs qui peuvent consister en un vérin pneumatique 70. Ce vérin va permettre de positionner l'embouchure 12 de la pipette 11 d'abord dans une première position où elle se trouve en dehors du récipient 2 (situation présentée par les figures 1f et 4), ensuite dans une deuxième position où elle se trouve plongée dans le liquide à un premier niveau A (situation présentée par la figure 1g), enfin dans une troisième position où elle se trouve plongée dans le liquide à un second niveau B, inférieur au premier (situation présentée par la figure 1i) et cela en réponse à des moyens de dosage dont un mode d'exécution sera examiné en détail plus bas.

La figure 5 montre aussi une seconde pipette 71 susceptible de se trouver d'abord au droit du premier récipient 1, puis au droit du troisième récipient 3 en suivant le chemin indiqué par la flèche 85 et ceci en réponse à des moyens de déplacement horizontaux 72 actionnés, par exemple, par le vérin pneumatique 73. On fera observer ici que les moyens de déplacement horizontaux 72 ne sont pas représentés en figure 4, ceci pour ne pas alourdir et compliquer cette figure 4. Une pompe 13 – par exemple une pompe péristaltique – est prévue pour transvaser le liquide du second récipient 2 dans l'un ou l'autre des récipients 1 et 3. Pour ce faire, l'entrée 74 de la pompe est reliée à la première pipette 11 par le tuyau souple 75 et la sortie 76 de ladite pompe est reliée à la seconde pipette 71 par le tuyau souple 77.

Des moyens de commande non représentés et qui ne sont autres que l'ordinateur dont il a été question plus haut, avec les interfaces qui lui sont associés, coordonne les mouvements de ces moyens de déplacement pour déverser dans le premier récipient 1 le liquide se trouvant au dessus du premier niveau A du deuxième récipient 2 et dans le troisième récipient 3 le liquide se trouvant entre les premier A et second B niveaux du même deuxième récipient 2. Le récipient 3 contient alors le volume de liquide dosé recherché.

Une fois obtenue la dose voulue de liquide, le véhicule se dégage du poste de travail dont il vient d'être question. Le récipient 3 peut alors se présenter à un nouveau poste de travail où il s'agira par exemple d'ajuster le pH de son liquide (processus de traitement de l'ATP cité plus haut). Le but à atteindre pourrait être différent cependant. Par exemple le liquide dosé pourrait, dans le nouveau poste de travail, être simplement pesé.

Reste à indiquer un moyen de dosage selon un mode d'exécution préféré de l'invention. Les figures 4 et 5 montrent que la première pipette 11 est portée par une traverse 80. Cette traverse peut venir buter contre un plan de référence 15 présenté par une pièce 81 fixé au bâti 45 de la machine. Dans cette situation, présentée schématiquement en figure 1i, l'embouchure 12 de la pipette 11 se trouve dans sa troisième position correspondant au niveau B du liquide.

Les figures 4 et 5 montrent que sur le bâti 45 de la machine sont montés des moyens de déplacement (par exemple l'électro-aimant 82) d'une cale 16. Cette cale peut être ajoutée au plan de référence 15 comme on le voit bien en figure 4. Quand la cale 16 est interposée entre la traverse 80 et le plan 15, la traverse vient buter contre la cale et l'embouchure 12 de la pipette 11 se trouve dans sa deuxième position correspondant au niveaux A du liquide. Donc dans ce mode d'exécution l'épaisseur de la cale est proportionnelle au volume de liquide à obtenir.

Le procédé et le dispositif pour sa mise en oeuvre concernent, dans la description ci-dessus, deux postes de travail successifs : filtration et dosage.

Si le liquide n'a pas besoin d'être filtré, mais simplement dosé, on pourrait soit débarasser le second récipient 2 de son papier filtre 41 et opérer le transvasement du premier au deuxième récipient comme indiqué ci-dessus au premier poste de travail, soit supprimer le premier poste et sucer le liquide de dosage directement dans le premier récipient. Dans ce dernier cas cependant il faudrait prévoir, sur le support 20, un récipient supplémentaire qui serve de poubelle.

Si, à l'inverse, le liquide n'a pas besoin d'être dosé, mais seulement filtré, on supprimera tout simplement le second poste de dosage.

## Revendications

1. Procédé de filtration et de dosage d'un échantillon liquide, caractérisé par le fait qu'on fournit un premier récipient (1) dans lequel on dispose l'échantillon (4) à filtrer et à doser, le volume de l'échantillon (4) étant constitué de la quantité d'échantillon (4) à obtenir majoré d'une quantité d'échantillon (4) en excès, qu'on fournit un deuxième récipient (2) dans lequel on transvase à travers des moyens de filtration (7) interposés entre les premier (1) et deuxième (2) récipients, l'échantillon (4) contenu dans le premier récipient (1), le volume de l'échantillon (4) transvasé étant également constitué de la quantité d'échantillon (4) à obtenir majoré d'une quantité d'échantillon (4) en excès, qu'on transvase dans le premier récipient (1) une quantité d'échantillon (4) qui soit inférieure à la quantité en excès contenu dans le deuxième récipient (2) et qu'on fournit un troisième récipient (3) dans lequel on transvase, à partir du deuxième récipient (2), la quantité d'échantillon liquide (4) à obtenir.

2. Procédé selon la revendication 1, caractérisé par le fait qu'on transvase l'échantillon (4) du premier (1) au deuxième (2) récipient au moyen d'air comprimé (5).

3. Procédé selon la revendication 1, caractérisé par le fait que, pour transvaser dans le premier récipient (1) une quantité d'échantillon (4) qui soit inférieure à la quantité en excès contenu dans le deuxième récipient (2), on plonge dans le liquide du deuxième récipient (2) une pipette (11) et on suce le liquide jusqu'à ce qu'il ait atteint un premier niveau (A) correspondant à l'embouchure (12) présentée par la pipette (11), le liquide sucé étant déversé dans ledit premier récipient (1) et que, pour transvaser dans le troisième récipient (3) la quantité d'échantillon liquide (4) à obtenir, on abaisse l'embouchure de ladite pipette (11) à un second niveau (B), inférieur au premier (A), le volume de liquide contenu entre lesdits premier (A) et second (B) niveaux correspondant à ladite quantité d'échantillon liquide (4) à obtenir, et on suce le liquide contenu entre les deux niveaux (A, B) jusqu'à ce qu'il ait atteint ledit second niveau (B), le liquide sucé (10) étant déversé dans ledit troisième récipient (3).

4. Dispositif de filtration et de dosage d'un échantillon liquide, caractérisé par le fait qu'il comporte un premier poste de filtration comprenant un premier récipient (1) contenant l'échantillon liquide (4) à filtrer et à doser majoré d'une quantité en excès par rapport au volume d'échantillon à obtenir, un deuxième récipient (2), comportant en outre des moyens de transvasement dudit échantillon dans ledit second récipient (2) et des moyens de filtration (7) interposés sur le chemin par lequel s'opère le transvasement, et un second poste de dosage disposé à la suite dudit premier poste de filtration, ce second poste de dosage comprenant des moyens de pompage (13) pour déverser d'abord dans le premier récipient (1) une certaine quantité de liquide contenu dans le deuxième récipient (2), puis dans un troisième récipient (3) une quantité prédéterminée de liquide contenu dans ledit deuxième récipient (2) et correspondant à la quantité du liquide à obtenir, ceci en réponse à des moyens de dosage (16) disposés sur ledit second poste.

5. Dispositif selon la revendication 4, caractérisé par le fait que le deuxième récipient (2) comprend un élément supérieur (23) comportant un bloc cylindrique (24) dans lequel est pratiquée une chambre annulaire (25) destinée à recevoir le liquide transvasé, une cuvette (27) entourant le bloc cylindrique (24) pour recevoir le liquide susceptible de déborder de la chambre (25) et un conduit axial (26) percé dans ledit bloc cylindrique (24), un élément intermédiaire (28) ajusté à l'élément supérieur (23) au moyen d'un premier joint d'étanchéité (29), cet élément intermédiaire (28) présentant sur sa partie inférieure une ouverture (30) alignée sur le conduit axial (26) de l'élément supérieur (23), une chambre de filtration (7) étant interposée entre lesdits éléments supérieur (23) et intermédiaire (28) et un élément inférieur (32) ajusté à l'élément intermédiaire (28) au moyen d'un deuxième joint d'étanchéité (33), cet élément inférieur (28) présentant une canule (34) émergeant de sa partie inférieure, ladite canule (34) étant alignée sur l'ouverture de l'élément intermédiaire (28), ledit élément inférieur (32) comportant en outre un troisième joint d'étanchéité (35) susceptible d'être appliqué sur les bords du premier récipient (1) lors du transvasement de liquide du premier (1) au deuxième (2) récipient et un canal (36) par lequel peut être injecté de l'air comprimé (5) pour transvaser le liquide du premier (1) au deuxième (2) récipient, ledit liquide suivant un chemin de transvasement composé successivement de la canule (34) de l'élément inférieur (32), de l'ouverture de l'élément intermédiaire (28), de la chambre de filtration (7) et du conduit axial (26) de l'élément supérieur (23).

6. Dispositif selon la revendication 5, caractérisé par le fait que la chambre de filtration (7) comporte une grille (39) faisant partie de l'élément supérieur (23) et qu'un filtre (41) est disposé contre ladite grille (39).

7. Dispositif selon la revendication 5, caractérisé par le fait que le premier poste de filtration comporte des premiers moyens moteurs (46) pour amener le deuxième récipient (2) à se déplacer dans un plan horizontal d'une première position de retrait à une deuxième position où sa canule (34) se trouve au droit de l'orifice présenté par le premier récipient (1), des moyens de préhension (55) dudit deuxième récipient (2) quand il se trouve dans ladite deuxième position et des seconds moyens moteurs (57) agissant sur lesdits moyens de préhension pour déplacer ledit deuxième récipient (2) dans un plan vertical et l'amener dans une troisième position où le troisième joint d'étanchéité (35) de l'élément inférieur (32) est appliqué sur les bords du premier récipient (1).

8. Dispositif selon la revendication 7, caractérisé par le fait que les moyens de préhension (55) comprennent un embout (64) connecté à une amenée d'air comprimé (5), un conduit (65) pratiqué à l'intérieur desdits moyens de préhension (55) et connecté à cet embout (64), le conduit (65) présentant un orifice (66) correspondant à l'entrée du canal (36) pratiqué dans l'élément inférieur (32) du deuxième récipient (2), un quatrième joint d'étanchéité (63) étant disposé entre l'orifice du conduit (65) et l'entrée du canal (36), ledit quatrième joint (63) étant compressé quand le deuxième récipient (2) est appliqué sur le premier (1).

9. Dispositif selon le revendication 4, caractérisé par le fait que le second poste de dosage comporte une première pipette (11) susceptible de plonger dans le deuxième récipient (2), des moyens de déplacement verticaux (70) de la première pipette (11) susceptibles de positionner son embouchure (12) d'abord dans une première position où elle se trouve en dehors du récipient (2), ensuite dans une deuxième position où elle se trouve plongé dans le liquide à un premier niveau (A), enfin dans une troisième position où elle se trouve plongé dans le liquide à un second niveau (B), inférieur au premier (A), lesdites deuxième et troisième positions étant définies par des moyens de dosage (16), une seconde pipette (71) susceptible de se trouver d'abord au droit du premier récipient (1), puis au droit du troisième récipient (3) en réponse à des moyens de déplacement horizontaux (72) de la seconde pipette (71), une pompe (13) dont l'entrée (74) et la sortie (76) sont reliées respectivement à la première (11) et à la seconde pipette (71) et des moyens de commande desdits moyens de déplacement verticaux et horizontaux pour déverser dans ledit premier récipient (1) le liquide se trouvant au-dessus du premier niveau (A) du deuxième récipient (2) et dans ledit troisième récipient (3) le liquide se trouvant entre les premier (A) et second (B) niveaux du deuxième récipient (2), le volume de ce liquide correspondant audit volume à obtenir.

10. Dispositif selon la revendication 9, caractérisé par le fait que la première pipette (11) est portée par une traverse (80) qui vient buter sur un plan de référence (15) lorsque l'embouchure (21) de ladite pipette (11) se trouve dans la troisième position et que les moyens de dosage consistent à ajouter une cale (16) sur le plan de référence de telle manière que, lorsque la cale (16) est ajoutée, la traverse (80) vient buter sur elle, l'embouchure de la première pipette (11) se trouvant alors dans la deuxième position, l'épaisseur de la cale (16) étant proportionnelle du volume de liquide

à obtenir.

## Ansprüche

1. Verfahren zum Filtern und Dosieren einer Flüssigkeitsprobe, dadurch gekennzeichnet, daß man einen ersten Behälter (1) bereitstellt, in den man eine zu filternde und dosierende Probe (4) einbringt, wobei das Volumen der Probe (4) aus der zu erlangenden Quantität der Probe (4), vermehrt um eine Überschußquantität der Probe (4), besteht, daß man einen zweiten Behälter (2) bereitstellt, in den man über Filtrationsmittel (7), angeordnet zwischen dem ersten (1) und zweiten (2) Behälter, die im ersten Behälter (1) enthaltene Probe (4) überführt, wobei das Volumen der überführten Probe (4) ebenfalls aus der Quantität der zu erlangenden Probe (4), vermehrt um eine Überschußquantität der Probe (4), besteht, daß man in den ersten Behälter (1) eine Quantität der Probe (4) überführt, die kleiner ist als die im zweiten Behälter (2) enthaltene Überschußquantität, und daß man einen dritten Behälter (3) bereitstellt, in den man aus dem zweiten Behälter (2) die Quantität der zu erlangenden Flüssigkeitsprobe überführt.

2. Verfahren nach Anspruch 1, dadurch gekennzeichnet, daß man die Probe (4) aus dem ersten Behälter (1) in den zweiten Behälter (2) mittels Druckluft (5) überführt.

3. Verfahren nach Anspruch 1, dadurch gekennzeichnet, daß man für die Überführung einer Quantität der Probe (4) in den ersten Behälter (1), die kleiner ist als die im zweiten Behälter (2) enthaltene Überschußquantität, in die Flüssigkeit des zweiten Behälters (2) eine Pipette (11) eintaucht und die Flüssigkeit absaugt, bis ein erster Pegel (A) entsprechend der Mündung (12), die die Pipette (11) aufweist, erreicht ist, wobei die abgesaugte Flüssigkeit in den ersten Behälter (1) abgegeben wird, und daß man für die Überführung der zu erlangenden Quantität der Flüssigkeitsprobe (4) in den dritten Behälter (3) die Mündung der Pipette (11) auf einen zweiten Pegel (B) unterhalb des ersten (A) absenkt, wobei das zwischen dem ersten (A) und dem zweiten (B) Pegel befindliche Flüssigkeitsvolumen der Quantität der zu erlangenden Flüssigkeitsprobe entspricht, und daß man die zwischen den beiden Pegeln (A, B) befindliche Flüssigkeit absaugt, bis sie den zweiten Pegel (B) erreicht, wobei die abgesaugte Flüssigkeit (10) in den dritten Behälter (3) abgegeben wird.

4. Vorrichtung zum Filtern und Dosieren einer Flüssigkeitsprobe, dadurch gekennzeichnet, daß sie eine erste Filtrationsstation umfaßt mit einem ersten Behälter (1), der die zu filternde und dosierende Flüssigkeitsprobe (4) enthält, vermehrt um eine bezüglich des zu erlangenden Probevolumens überschüssige Quantität, mit einem zweiten Behälter (2), der ferner Mittel zum Überführen der Probe in den zweiten Behälter (2) und Filtrationsmittel (7) umfaßt, eingefügt in die Strecke, auf der die Überführung stattfindet, und daß die Vorrichtung eine zweite Dosierstation, nachgeschaltet der ersten Filtrationsstation, umfaßt mit Pumpmitteln (13) zum Abgeben, zunächst in den ersten Behälter (1), einer bestimmten Quantität der im zweiten Behälter (2) enthaltenen Flüssigkeit, und danach, in einen dritten Behälter (3), einer vorbestimmten, der zu erlangenden Flüssigkeitsquantität entsprechenden Quantität der im zweiten Behälter (2) enthaltenen Flüssigkeit in Abhängigkeit von an der zweiten Station angeordneten Dosiermitteln (16).

5. Vorrichtung nach Anspruch 4, dadurch gekennzeichnet, daß der zweite Behälter (2) ein oberes Element (23) umfaßt, enthaltend einen zylindrischen Block (24), in den eine Ringkammer (25) für die Aufnahme der überführten Flüssigkeit eingearbeitet ist, eine den zylindrischen Block (24) umschließende Küvette (27) für die Aufnahme von etwa aus der Kammer (25) überlaufender Flüssigkeit, und eine in den zylindrischen Block (24) eingearbeitete axiale Leitung (26), daß der Behälter ein Zwischenelement (28) umfaßt, das an das obere Element (23) mittels einer ersten Dichtung (29) angepaßt ist, welches Zwischenelement (28) auf seiner unteren Partie eine mit der axialen Leitung (26) des oberen Elements (23) ausgefluchtete Öffnung (30) aufweist, daß eine Filtrationskammer (7) zwischen dem oberen Element (23) und dem Zwischenelement (28) eingefügt ist, und mit einem unteren Element (32), das an das Zwischenelement (28) mittels einer zweiten Dichtung (33) angepaßt ist, welches untere Element (32) eine an seiner unteren Partie austretende Kanüle (34) aufweist, die mit der Öffnung des Zwischenelements (28) ausgefluchtet ist, welches untere Element (32) ferner eine dritte Dichtung (35) aufweist, die auf die Ränder des ersten Behälters (1) bei der Überführung der Flüssigkeit aus dem ersten (1) in den zweiten Behälter (2) aufsetzbar ist, sowie einen Kanal (36) aufweist, über den Druckluft (5) injizierbar ist zum Überführen der Flüssigkeit aus dem ersten (1) in den zweiten (2) Behälter, welche Flüssigkeit einer Überführungsstrecke folgt, sukzessiv zusammengesetzt aus der Kanüle (34) des unteren Elements (32), der Öffnung des Zwischenelements (28), der Filtrationskammer (7) und der axialen Leitung (26) des oberen Elements (23).

6. Vorrichtung nach Anspruch 5, dadurch gekennzeichnet, daß die Filtrationskammer (7) ein einen Teil des oberen Elements (23) bildendes Gitter (39) und ein an dieses Gitter (39) angelegtes Filter (41) umfaßt.

7. Vorrichtung nach Anspruch 5, dadurch gekennzeichnet, daß die erste Filtrationsstation erste Motormittel (46) zum Antrieb des zweiten Behälters (2) für dessen Verlagerung in einer Horizontalebene aus einer ersten, zurückgezogenen Position in eine zweite Position umfaßt, in der seine Kanüle (34) sich gegenüber der Öffnung befindet, die der erste Behälter (1) aufweist, ferner Greifmittel (55) des zweiten Behälters (2) umfaßt, wenn dieser sich in der zweiten Position befindet, und zweite Motormittel (57) umfaßt, die auf die Greifmittel einwirken zum Verlagern des zweiten Behälters (2) in einer Vertikalebene in eine dritte Position, in der die dritte Dichtung (35) des unteren Elements (32) auf die Ränder des ersten Behälters (1) aufgesetzt ist.

8. Vorrichtung nach Anspruch 7, dadurch gekennzeichnet, daß die Greifmittel (55) einen an eine Druckluftquelle (5) angeschlossenen Stutzen (64) und eine im Innern der Greifmittel (55) ausgebildete und an den Stutzen (64) angeschlossene Leitung (65) umfassen, die eine Öffnung (66) entsprechend dem Eingang des Kanals, eingearbeitet in das untere Element (32) des zweiten Behälters, aufweist, wobei eine vierte Dichtung (63) zwischen der Öffnung der Leitung (65) und dem Eingang des Kanals (36) angeordnet ist, die komprimiert wird, wenn der zweite Behälter (2) auf den ersten (1) aufgesetzt wird.

9. Vorrichtung nach Anspruch 4, dadurch gekennzeichnet, daß die zweite Dosierstation eine erste, in den zweiten Behälter (2) eintauchbare Pipette (11) und Mittel zum Vertikalverlagern (70) der ersten Pipette (11) zum Positionieren ihrer Mündung (12) zunächst in eine erste Position, in der sie sich außerhalb des Behälters (2) befindet, danach in eine zweite Position, in der sie in die Flüssigkeit bis zu zu einem ersten Pegel (A) eintaucht, und schließlich in eine dritte Position, in der sie in die Flüssigkeit bis zu einem zweiten Pegel (B) unterhalb des ersten Pegels (A) eintaucht, wobei die zweite und dritte Position durch Dosiermittel (16) definiert sind, eine zweite Pipette (71), die zunächst gegenüber dem ersten Behälter (1) plazierbar ist, danach gegenüber dritten Behälter im Ansprechen auf Horizontalverlagerungsmittel (72) der zweiten Pipette (71), eine Pumpe (13), deren Einlaß (74) und Auslaß (76) mit der ersten (11) bzw. zweiten (71) Pipette verbunden sind, sowie Steuermittel der Vertikal- und Horizontalverlagerungsmittel umfaßt zum Abgeben der Flüssigkeit, die sich oberhalb des ersten Pegels (A) im zweiten Behälter (2) befindet, in den ersten Behälter (1), und der Flüssigkeit, die sich zwischen dem ersten (A) und dem zweiten Pegel (B) des zweiten Behälters (2) befindet und deren Volumen dem zu erlangenden Volumen entspricht, in den dritten Behälter (3).

10. Vorrichtung nach Anspruch 9, dadurch gekennzeichnet, daß die erste Pipette (11) von einer Traverse (80) getragen ist, die auf einer Bezugsebene (15) zur Anlage kommt, wenn die Mündung (12) dieser Pipette (11) sich in der dritten Position befindet, und daß die Dosiermittel aus dem Hinzufügen einer Beilage (16) auf die Bezugsebene derart bestehen, daß bei hinzugefügter Beilage (16) die Traverse (80) auf ihr zur Anlage kommt, womit sich die Mündung der ersten Pipette (11) in der zweiten Position befindet, wobei die Höhe der Beilage (16) proportional dem zu erlangenden Flüssigkeitsvolumen ist.

## Claims

1. Method of filtering and metering a liquid sample, characterized by the fact that a first recipient (1) is provided in which is placed the sample (4) to be filtered and metered, the volume of the sample (4) comprising the desired quantity of sample (4) plus an excess of sample (4), that a second recipient (2) is provided into which is decanted, through filtering means (7) interposed between the first (1) and second (2) recipients, the sample (4) contained in the first recipient (1), the volume of the decanted sample (4) likewise comprising the desired quantity of sample (4) plus an excess of sample (4), that is decanted into the first recipient (1) a quantity of sample (4) less than the excess quantity contained in the second recipient (2) and that a third recipient (3) is provided into which is decanted, from the second recipient (2), the desired quantity of the liquid sample (4).

2. Method according to claim 1, characterized by the fact that the sample (4) is decanted from the first (1) to the second (2) recipient by means of compressed air (5).

3. Method according to claim 1, characterized by the fact that, in order to decant into the first recipient (1) a quantity of sample (4) less than the excess quantity contained in the second recipient (2), a pipette (11) is plunged into the liquid of the second recipient (2) and the liquid is sucked up until a first level (A) is attained corresponding to the orifice (12) shown by the pipette (11), the sucked liquid being discharged in said first recipient (1), and that, in order to decant into the third recipient (3) the desired quantity of liquid sample (4), the orifice of said pipette (11) is lowered to a second level (B) below the first level (A), the volume of liquid contained between said first (A) and second (B) levels corresponding to said desired quantity of liquid sample (4), and the liquid contained between the two levels (A, B) is sucked up until the lower level (B) is attained, the sucked liquid (10) being discharged in said third recipient (3).

4. Arrangement for filtering and metering a liquid sample, characterized by the fact that it includes a first filtering station comprising a first recipient (1) containing the liquid sample (4) to be filtered and metered plus a quantity in excess of the desired sample volume, a second recipient (2) further including means for decanting said sample into said second recipient (2) and filtering means (7) interposed in the decanting circuit, and a second metering station located after said first filtering station, said second metering station comprising pumping means (13) for initially discharging into the first recipient (1) a certain quantity of liquid contained in said second recipient (2), subsequently discharging into a third recipient (3) a predetermined quantity of liquid contained in said second recipient (2) and corresponding to the desired liquid quantity in response to metering means (16) arranged in the second station.

5. Arrangement according to claim 4, characterized by the fact that the second recipient (2) comprises an upper element (23) including a cylindrical block (24) in which is formed an annular chamber (25) intended to receive the decanted liquid, a bowl (27) surrounding the cylindrical block (24) arranged to receive liquid overflow from the chamber (25) and an axial duct (26) piercing said cylindrical block (24), an intermediate element (28) fitted to the upper element (23) by means of a first seal (29), said intermediate element (28) having on its lower portion an opening (30) aligned with the axial duct (26) of the upper element (23), a filter chamber (7) being interposed between said upper (23) and intermediate (28) elements and a lower element (32) fitted to the intermediate element (28) by means of a second seal (33), this lower element (32) exhibiting a nozzle (34) projecting from its lower portion, said nozzle (34) being aligned with the opening of the intermediate element (28), said lower element (32) further including a third seal (35) adapted to be applied to the rim of the first recipient (1) during decanting of liquid from the first (1) to the second (2) recipient and a duct (36) through which compressed air (5) may be injected in order to decant the liquid from the first (1) to the second (2) recipient, said liquid following a decanting circuit formed successively by the nozzle (34) of the lower element (32), the opening of the intermediate element (28), the filter chamber (7) and the axial duct (26) of the upper element (23).

6. Arrangement according to claim 5, characterized by the fact that the filter chamber (7) includes a grid (39) forming part of the upper element (23) and that a filter (41) is arranged against said grid (39).

7. Arrangement according to claim 5, characterized by the fact that the first filtering station includes first motor means (46) for effecting displacement of the second recipient (2) in a horizontal plane from a first withdrawn position to a second position where its nozzle (34) is aligned with the orifice of the first recipient (1), grasping means (55) of said second recipient (2) when located in said second position and second motor means (57) acting on said grasping means so as to displace said second recipient in a vertical plane and to bring it in a third position in which the third seal (35) of the lower element (32) is applied to the rim of the first recipient (1).

8. Arrangement according to claim 7, characterized by the fact that the grasping means (55) comprise a nipple (64) connected to a compressed air (5) supply, a conduit (65) formed within said grasping means (55) and connected to this nipple (64), the conduit (65) having an orifice (66) corresponding to the duct (36) entry provided in the lower element (32) of the second recipient (2), a fourth seal (63) arranged between the orifice of the conduit (65) and the duct (36) entry, said fourth seal (63) being compressed when the second recipient (2) is applied to the first (1).

9. Arrangement according to claim 4, characterized by the fact that the second metering includes a first pipette (11) adapted to be plunged into the second recipient (2), means for vertically displacing (70) said first pipette (11) arranged to position its orifice (12) initially in a first position outside the recipient (2), then to a second position where it plunges into the liquid to a first level (A), finally to a third position in which it plunges into the liquid to a second level (B), below the first (A), said second and third positions being determined by metering means (16), a second pipette (71) adapted to be aligned initially with the first recipient (1), then with the third recipient (3) in response to horizontal displacement means (72) for the second pipette (71), a pump (13) the intake (74) and discharge (76) of which are respectively coupled to the first (11) and second (71) pipette and control means for said vertical and horizontal displacement means thereby to decant into said first recipient (1) the liquid above the first level (A) of the second recipient (2) and into the third recipient (3) the liquid between the first (A) and second (B) levels of the second recipient (2), the volume of such liquid corresponding to the desired volume.

10. Arrangement according to claim 9, characterized by the fact that the first pipette (11) is borne by a crossbar (80) which comes to butt against a reference plane (15) when the orifice (21) of said pipette (11) arrives in the third position and that the metering means consist in the placing of a regulating shim (16) on the reference plane in a manner such that when the shim (16) is added, the crossbar (80) butts against it, the orifice of the first pipette (11) then being in the second position, the thickness of the shim (16) being proportional to the desired volume of liquid.

Fig. 1

*Fig. 2*

*Fig. 3*

EP 0 311 917 B1

Fig. 4

Fig. 5

15